# EUROPEAN PATENT APPLICATION

(11) **EP 1 156 687 A1**
(43) Date of publication of application: **21.11.2001**
(21) Application number: 00981835.2
(22) Date of filing: 19.12.2000
(51) Int. Cl.: H04Q 7/30

(54) **BASE STATION DEVICE AND TRANSMISSION POWER CONTROL METHOD**

(30) Priority: 28.12.1999 JP 37526099
(71) Applicant: MATSUSHITA ELECTRIC INDUSTRIAL CO., LTD., Kadoma-shi, Osaka 571-8501 (JP)
(72) Inventor: UEHARA, Toshiyuki, Yokosuka-shi, Kanagawa 239-0847 (JP); UE, Toyoki, Yokosuka-shi, Kanagawa 238-0022 (JP); SUMASU, Atsushi, Yokosuka-shi, Kanagawa 239-0833 (JP); KATO, Osamu, Yokosuka-shi, Kanagawa 237-0066 (JP); UESUGI, Mitsuru, Yokosuka-shi, Kanagawa 238-0048 (JP)
(74) Representative: Grünecker, Kinkeldey, Stockmair & Schwanhäusser Anwaltssozietät
(86) International application number: JP0009004
(87) International publication number: WO0149053

(57) **Abstract**

A control signal generation section 106 generates a transmission power control signal for instructing transmission power to a mobile station apparatus on the basis of a comparison result of a measured SIR with a target SIR. A transmission power control section 111 controls transmission processing to a transmission signal including the transmission power control signal generated by the control signal generation section 106 on the basis of a transmission power control signal transmitted by the mobile station apparatus. Moreover, the control signal generation section 106 and the transmission power control section 111 respectively perform the generation of the transmission power control signal and the control of the transmission processing to the transmission signal according to an appearance of a new mobile station apparatus or an appearance of a new interference source.

## Description

### Technical Field

The present invention relates to a base station apparatus and a transmission power control method in a cellular system of a code division multiple access (CDMA) system.

### Background Art

As a conventional transmission power control method in a cellular system of the CDMA system, there is one that is disclosed in "Performance of SIR-Based Transmit Power Control using Outer Loop in the Forward Link of DS-CDMA", *The Institute of Electronics*, *Information and Communication Engineers,* Technical Report of IEICE, AP96-148, EMCJ96-83, RCS96-162, MW96-188 (1997-02).

The conventional transmission power control method in a cellular system of the CDMA system is described in the following. The transmission power control between a mobile station apparatus (or a communication terminal apparatus) and a base station apparatus is performed as follows at every cycle of one slot.

At first, the mobile station apparatus measures a signal to interference power ratio (SIR) indicating a reception quality at every slot, and compares the SIR that was measured (hereinafter referred to as a "measured SIR" ) and the SIR that is a target (hereinafter referred to as a "target SIR"). Moreover, the mobile station apparatus transmits a signal (or a transmission power control signal) instructing the base station apparatus to decrease transmission power when the measured SIR is larger than the target SIR, and contrarily the mobile station apparatus transmits a signal (or a transmission power control signal) instructing the base station to increase transmission power when the measured SIR is equal to the target SIR or below. In such a way, the base station apparatus increases or decreases its transmission power to the mobile station apparatus at every slot in conformity with the contents of the instruction issued by the mobile station apparatus.

Incidentally, the transmission power control signal mentioned above is transmitted not only from the mobile station apparatus to the base station apparatus, but is also transmitted from the base station apparatus to the mobile station apparatus. The generation processes of the transmission power control signal in the base station apparatus are the same as the aforesaid ones performed by the mobile station apparatus.

Furthermore, the base station apparatus performs outer loop control by the consideration of the fact that a target SIR for the acquisition of a received signal satisfying necessary qualities by the mobile station apparatus changes according to the environment of the mobile station apparatus. To put it concretely, the base station apparatus first measures a frame error rate (FER) by the use of data after decoding, and then the base station apparatus compares the FER that was measured (hereinafter referred to as a "measured FER") and a FER that is a target (hereinafter referred to as a "target FER") at every interval of several frames. Furthermore, the base station apparatus sets the target SIR in the mobile station large when the measured FER is larger than the target FER, and sets the target SIR in the mobile station small when the measured FER is equal to the target FER or below.

The mobile station apparatus transmits a transmission power control signal to the base station apparatus by the use of the target SIR set by the base station apparatus as described above. Incidentally, the outer loop control mentioned above is not only performed with regard to the target SIR in the mobile station apparatus, but is also performed with regard to the target SIR in the base station apparatus.

As described above, in the conventional transmission power control method, the mobile station apparatus and the base station apparatus respectively transmit a transmission power control signal to the base station apparatus and the mobile station apparatus on the basis of the measured SIR, and the base station apparatus changes the target SIR in the mobile station apparatus and the target SIR in the base station apparatus by means of the outer loop control.

However, because the transmission power of the mobile station apparatus and the transmission power of the base station apparatus are controlled to be kept at the minimum values necessary for the satisfaction of necessary qualities of a received signal of a communication partner by means of the outer loop control in the conventional transmission power control method in the cellular system of the CDMA system, there is a possibility that the communication qualities of the mobile station apparatus or the base station apparatus deteriorate owing to various factors to be described in the following.

At first, when a new mobile station apparatus enters into a cell that is operated by a certain base station apparatus by a new connection or a handover, the base station apparatus and existing mobile station apparatuses that are communicating with the base station apparatus are interfered by the new mobile station apparatus. Now, because the transmission power of the base station apparatus to the existing mobile station apparatuses and the transmission power of the existing mobile station apparatuses to the base station apparatus are controlled to be the necessary minimum values as described above, the communication qualities of the base station apparatus and the existing mobile station apparatuses deteriorate by being interfered by the new mobile station apparatus.

As a concrete example, in a cell having a little traffic (for example, only a few voice users exist), it can be considered that, because each mobile station apparatus can make its measured SIR exceed its target SIR even if it adopts low transmission power, each mobile station apparatus lowers its transmission power. Similarly, because the base station apparatus can make a measured SIR in each mobile station apparatus exceed its target SIR even if it adopts low transmission power, it can be considered that the base station apparatus lowers the transmission power.

In such circumstances, when new communication begins by the generation of burst packet, the situation is like one in which a large interference source suddenly appeared for the existing mobile station apparatuses. Thereby, the measured SIR in the base station apparatus falls below its target SIR, and the measured SIR in each mobile station apparatus falls below its target SIR. As a result, the transmission power control cannot catch up, and it takes a time that the measured SIR in the base station apparatus exceeds its target SIR. Similarly, it takes a time that the measured SIR in each mobile station apparatus exceeds its target SIR. Consequently, in the base station apparatus and each mobile station apparatus, communication qualities are damaged up to the time when their measured SIRs exceed their target SIRs.

Secondly, in a cell operated by a certain base station apparatus (supposed to be a first base station apparatus), when a new interference source (for example, a mobile station apparatus that appeared from a shade of a building, a tunnel or the like suddenly and is communicating with another base station apparatus (supposed to be a second base station apparatus)) has appeared, the first base station apparatus is greatly interfered by the mobile station apparatus that appeared suddenly and is communicating with the second base station apparatus. Now, because the transmission power in the existing mobile station apparatuses to the first base station apparatus is controlled to be the necessary minimum values as described above, the communication qualities of the base station apparatus deteriorate by being interfered by the suddenly appeared mobile station apparatus. That is, the measured SIR in the first base station apparatus becomes below its target SIR.

As described above, the conventional transmission power control method in the cellular system of the CDMA system has a problem such that the communication qualities of a base station apparatus or a mobile station apparatus communicating with the base station apparatus deteriorate owing to a new mobile station apparatus that has appeared in the cell by the generation of a new connection, a handover, packet communication or the like or an interference source that newly appeared by shadowing (a problem such as a shade of a building).

Furthermore, the base station apparatus and the mobile station apparatus need to evaluate interference power when they measure their SIRS. Here, there is a case where an algorithm for evaluating the interference power on the basis of an average of it for a long time in some degree is used. In this case, when a large interference is suddenly generated, the interference power on the algorithm does not instantaneously become large, but the influence of the interference generated like the above is reflected on the interference power on the algorithm after the passage of time in some degree.

Consequently, when measured SIRS become small owing to the aforesaid first factor and the second factor in the base station apparatus and the mobile station apparatus, a further time is needed until the measured SIRS exceed target SIRS.

### Disclosure of Invention

An object of the present invention is to provide a base station apparatus and a transmission power control method that prevent the deterioration of communication qualities caused by the appearance of a new communication terminal apparatus, the appearance of a new interference source or the like.

The object is achieved by the execution of the generation of a transmission power control signal and the control of transmission processing according to factors influencing the qualities of the communication between a base station apparatus and a communication terminal apparatus.

### Brief Description of Drawings

FIG. 1 is a block diagram showing the configuration of a base station apparatus according to Embodiment 1 of the present invention;
FIG. 2 is a block diagram showing the configuration of the control signal generation section in the base station apparatus according to Embodiment 1 of the present invention;
FIG. 3 is a block diagram showing the configuration of the target SIR decision section in the control signal generation section in the base station apparatus according to Embodiment 1 of the present invention;
FIG. 4 is a mimetic diagram showing the SIR measurement method by the base station apparatus according to the embodiment of the present invention;
FIG. 5 is a flow chart showing a control procedure to the transmission power of the base station apparatus according to Embodiment 1 of the present invention by the present base station apparatus in the case where a new mobile station apparatus appears;
FIG. 6 is a flow chart showing a control procedure to the transmission power in each mobile station apparatus by the base station apparatus according to Embodiment 1 of the present invention in the case where a new mobile station apparatus appears;
FIG. 7 is a flow chart showing a control procedure to the transmission power in each mobile station apparatus by the base station apparatus according to Embodiment 1 of the present invention in the case where a new interference source has appeared;
FIG. 8 is a block diagram showing the configuration of a base station apparatus according to Embodiment 2 of the present invention;
FIG. 9 is a block diagram showing the configuration of the control signal generation section in the base station apparatus according to Embodiment 2 of the present invention;
FIG. 10 is a flow chart showing a control procedure to the transmission power of the base station apparatus according to Embodiment 2 of the present invention by the present base station apparatus in the case where a new mobile station apparatus appears;
FIG. 11 is a flow chart showing a control procedure to the transmission power of each mobile station apparatus by the base station apparatus according to Embodiment 2 of the present invention in the case where a new mobile station apparatus appears;
FIG. 12 is a flow chart showing a control procedure to the transmission power of each mobile station apparatus by the base station apparatus according to Embodiment 2 of the present invention in the case where a new interference source has appeared;
FIG. 13 is a block diagram showing the configuration of a base station apparatus according to Embodiment 3 of the present invention;
FIG. 14 is a flow chart showing a control procedure to the transmission power of the base station apparatus according to Embodiment 3 of the present invention by the present base station apparatus in the case where a new mobile station apparatus appears;
FIG. 15 is a block diagram showing the configuration of a base station apparatus according to Embodiment 4 of the present invention; and
FIG. 16 is a flow chart showing a control procedure to the transmission power of the base station apparatus according to Embodiment 4 of the present invention by the present base station apparatus in the case where a new mobile station apparatus appears.

### Best Mode for Carrying Out the Invention

The best modes for carrying out of the present invention are described in detail in the following by reference to the attached drawings.

### (Embodiment 1)

With respect to the present Embodiment, a case is described where a target SIR in a base station apparatus or a target SIR in a mobile station apparatus is changed.

At first, an outline of the base station apparatus according to the present Embodiment is described. Now, the base station apparatus according to the present Embodiment (hereinafter simply referred to as a "base station apparatus") performs the radio communication with each mobile station apparatus (or each communication terminal apparatus) in the CDMA system.

The base station apparatus performs the transmission power control according to a first case and a second case that will be shown in the following. The fist case corresponds to a case where a new mobile station apparatus appears in a cell operated by the base station apparatus by the generation of new connection, a handover, packet communication or the like (hereinafter referred to as "a case where a new mobile station apparatus appears"). Moreover, the second case corresponds to a case where a mobile station apparatus that is communicating with another base station apparatus suddenly enters into the cell operated by the present base station apparatus from a shade of a building, a tunnel or the like (hereinafter referred to as "a case where a new interference source appeared").

At first, the transmission power control by the base station apparatus in the case where a new mobile station apparatus appears is described. The base station apparatus acquires through an upper layer the information indicating that a new mobile station apparatus will appear.

When a new mobile station apparatus appears, the base station apparatus increases the target SIR (a desired reception quality) in the present base station apparatus for preventing the deterioration of the qualities of communication with existing mobile station apparatuses by the communication with the new mobile station apparatus . Moreover, the base station apparatus generates a transmission power control signal to each mobile station apparatus on the basis of the increased target SIR. That is, the base station apparatus transmits the transmission power control signal instructing the increase of transmission power to each mobile station apparatus.

After that, each mobile station apparatus increases its transmission power to the base station apparatus on the basis of the transmission power control signal transmitted by the base station apparatus. The base station apparatus begins the communication with the new mobile station apparatus in a state in which the transmission power of each mobile station apparatus has become large. Thereby, a signal transmitted by each existing mobile station apparatus is received by the base station apparatus in a good reception state while the signal is interfered by a signal transmitted by the new mobile station apparatus.

According to various situations such as a state immediately after the beginning of the communication with the new mobile station apparatus, a state after a fixed period of time has passed, or other states, the base station apparatus restores the target SIR in the present base station apparatus to its former target SIR.

In the case where a new mobile station apparatus appears, the base station apparatus not only increases the target SIR in the base station apparatus, but the base state apparatus also increases the target SIR in each mobile station apparatus. That is, the base station apparatus transmits a signal instructing the change of the target SIR in each mobile station apparatus to each mobile station apparatus.

After that, each mobile station apparatus receives the signal instructing the increase its target SIR. As a result, each mobile station apparatus transmits a transmission power control signal instructing the increase of the transmission power of the base station apparatus to the base station apparatus. Accordingly, the base station apparatus increases its transmission power to each mobile station apparatus.

As a result, the signal transmitted by the base station apparatus is received by each mobile station apparatus in a good reception state while the signal is interfered by a signal transmitted by the base station apparatus to the new mobile station apparatus.

According to various situations such as a situation after a fixed period of time has passed, or other situations, each mobile station apparatus restores its target SIR to its former target SIR by receiving the instruction from the base station apparatus, or restores its target SIR to its former target SIR on its own judgment.

Next, the transmission power control by a base station apparatus in a case where a new interference source has appeared is described. The base station apparatus can recognize that a new interference source has appeared when the received power at its antenna exceeds a certain threshold value.

When a new interference source has appeared, the base station apparatus increases the target SIR in the present base station apparatus for preventing the deterioration of communication qualities with existing mobile station apparatuses by the new interference source similarly in the aforementioned case where a new mobile station appears. Thereby, as described above, because the base station apparatus transmits a transmission power control signal instructing the increase of transmission power to each mobile station apparatus, each mobile station apparatus increases respective transmission power to the base station apparatus. As a result, a signal transmitted by each mobile station apparatus is received by the base station apparatus while being interfered by a new interference source.

According to various situations such as a situation after a fixed period of time has passed, or other situations, the base station apparatus restores the target SIR in the present base station apparatus to its former target SIR.

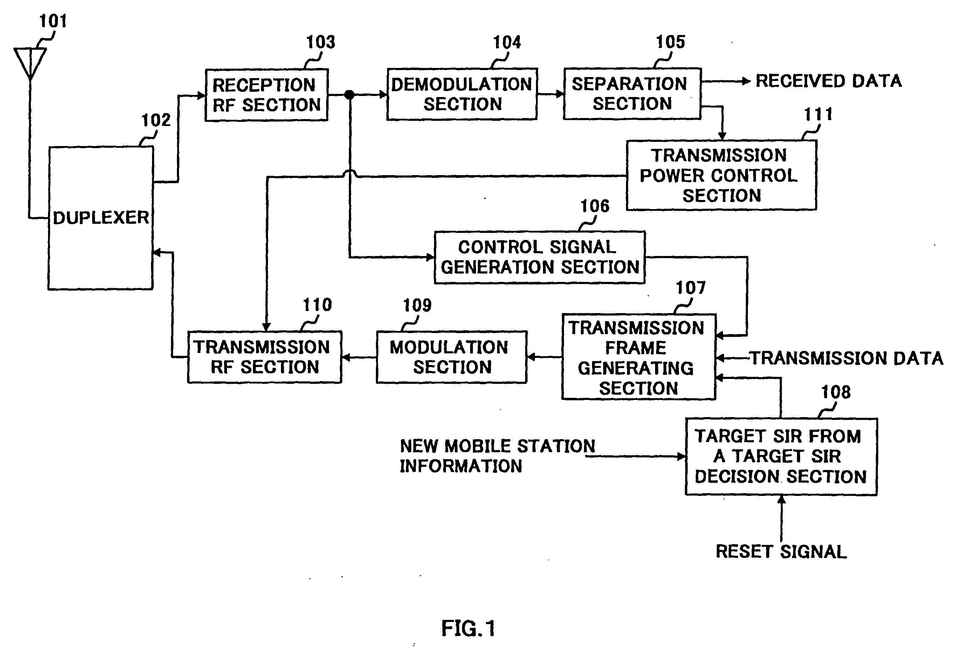

The configuration of the base station apparatus for realizing the aforesaid transmission power control is described by reference to the drawings. FIG. 1 is a block diagram showing the configuration of a base station apparatus according to Embodiment 1 of the present invention.

In FIG. 1, a duplexer 102 outputs a received signal from an antenna 101 to a reception RF section 103 at a receiving time, and transmits a transmission signal from a transmission RF section 110 that will be described later through the antenna 101 at a time of transmission. Incidentally, the received signal corresponds to a signal consisting of signals that were transmitted by each mobile station apparatus mainly and were received by the antenna 101 at a state of being multiplexed by the code division multiplexing in the same frequency band.

The reception RF section 103 firstly performs prescribed reception processing such as frequency conversion to the received signal from the duplexer 102. Furthermore, the reception RF section 103 extracts a received signal of each mobile station apparatus by performing the despreading processing using a prescribed spreading code to the received signal after the aforesaid reception processing.

A demodulation section 104 extracts a demodulated signal of each mobile station apparatus by performing prescribed demodulation processing to the received signal of each mobile station apparatus from the reception RF section 103. A separation section 105 separates and extracts received data and a TPC bit from the demodulated signal of each mobile station apparatus. The TPC bit of each mobile station apparatus is transmitted to a transmission power control section 111.

The transmission power control section 111 controls the transmission power of a transmission signal to each mobile station apparatus by the use of a TPC bit of each mobile station apparatus. That is, the transmission power control section 111 controls the transmission RF section 110 that will be described later in such a way that the transmission RF section 110 increases the transmission power of a transmission signal to a mobile station apparatus the TPC bit of which is "1" by a prescribed value and contrarily decreases the transmission power of a transmission signal to a mobile station apparatus the TPC bit of which is "0" by a prescribed value.

On the other hand, a control signal generation section 106 generates a transmission power control signal to each mobile station apparatus at every slot by the use of a known pattern part in the received signal from the reception RF section 103, and outputs the generated transmission power control signal to a transmission frame generating section 107. The transmission power control signal is a signal instructing the increase or the decrease of transmission power to each mobile station apparatus. Moreover, the aforesaid known pattern part in the received signal corresponds to, for example, a pilot (PL) bit in the received signal. Incidentally, the concrete configuration of the control signal generation section 106 will be described later.

The transmission frame generating section 107 receives the inputs of transmission data from a not shown preceding step circuit, the transmission power control signal to each mobile station apparatus from the control signal generation section 106, and a target SIR from a target SIR decision section 108. The target SIR decision section 108 decides the target SIR of each mobile station apparatus in a case where a new mobile station apparatus has appeared. Incidentally, the details of the target SIR decision section 108 will be described later.

The transmission frame generating section 107 makes a transmission signal of a unit transmission frame configuration to each mobile station apparatus by the use of each inputted signal. The unit transmission frame includes a plurality of slots, and each slot mainly includes a PL bit, a TPC bit and a data bit. The transmission data is inserted into the data bit, and the transmission power control signal is inserted into the TPC bit, and further the target SIR is inserted into the data bit. To put it more fully, the TPC bit takes "1" and "0" in the case where the transmission power control signal has a "content instructing the increase of transmission power" and in the case where the transmission power control signal has a "content instructing the decrease of transmission power", respectively.

A modulation section 109 performs the prescribed modulation processing of the transmit signal to each mobile station apparatus.

The transmission RF section 110 firstly performs the spreading processing using a spreading code peculiar to each mobile station apparatus to the transmission signal to each mobile station apparatus after modulation, and then the transmission RF section 110 performs the prescribed transmission processing such as frequency conversion. Furthermore, the transmission RF section 110 performs the transmission processing of the transmission signal to each mobile station apparatus after the aforesaid transmission processing. That is, the transmission RF section 110 amplifies the transmission signal to each mobile station apparatus to have prescribed transmission power in conformity with the control of the transmission power control section 111. After that, the transmission RF section 110 multiplexes the amplified transmission signal to each mobile station apparatus, and transmits the multiplexed transmission signal through the duplexer 102 and the antenna 101.

Next, the target SIR decision section 108 is described. To the target SIR decision section 108, information indicating whether a new mobile station apparatus appears or not (hereinafter referred to as "new mobile station information") is input.

The target SIR decision section 108 outputs a signal instructing the change of the target SIR in each mobile station apparatus to the transmission frame generating section 107 in the case where interference has appeared (namely, the new mobile station information indicates that "a new mobile station apparatus appears"). Incidentally, as the signal instructing the change of the target SIR of each mobile station apparatus, a signal requiring the increase of the target SIR may be used, or a signal indicating the value of the target SIR directly may be used. However, the target SIR decision section 108 sets the target SIR in each mobile station apparatus in order to satisfy a condition that a signal transmitted by the base station apparatus is received by each mobile station apparatus in a good state while the signal is being interfered by a signal transmitted by the base station apparatus to the new mobile station apparatus.

Furthermore, the target SIR decision section 108 outputs a signal instructing each mobile station apparatus to restore each target SIR to each former target SIR to the transmission frame generating section 107 in case of the reception of a reset signal.

The reset signal is inputted into the target SIR decision section 108 when a fixed time has passed after the appearance of an interfered state or when a prescribed condition (for example, whether the influence of the newly appeared interference exerts the averaging of interference power or not) is satisfied after the appearance of the interfered state.

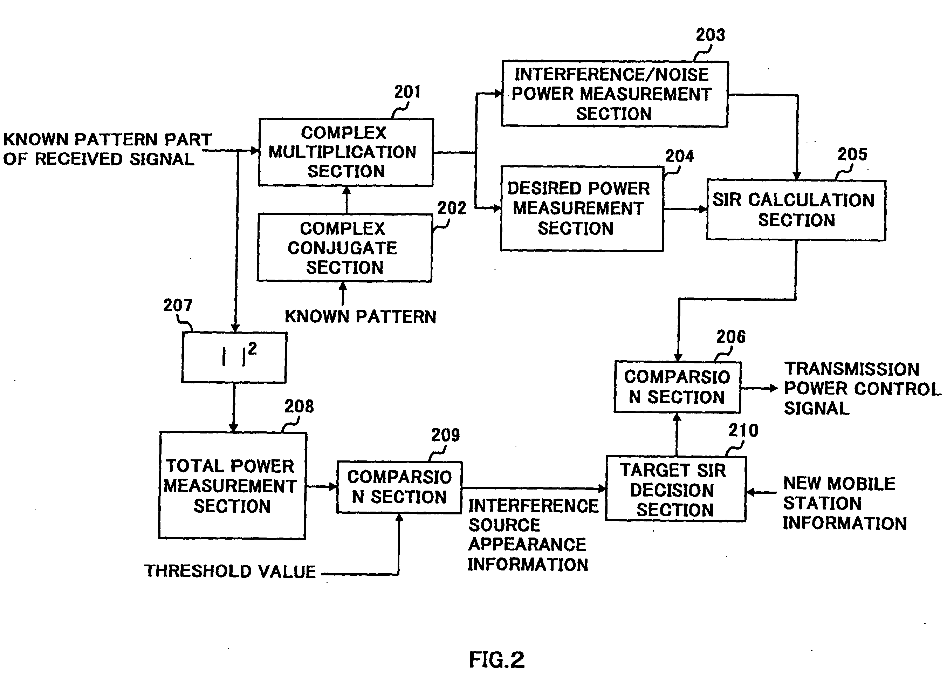

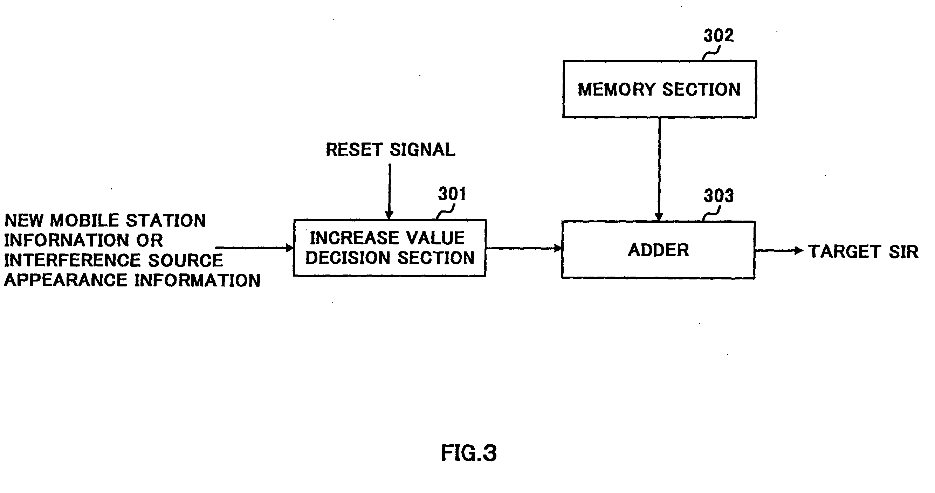

Next, the concrete configuration of the control signal generation section 106 is described by reference to FIG. 2 and FIG. 3. FIG. 2 is a block diagram showing the configuration of the control signal generation section 106 in the base station apparatus according to Embodiment 1 of the present invention. FIG. 3 is a block diagram showing the configuration of a target SIR decision section 210 in the control signal generation section 106 in the base station apparatus according to Embodiment 1 of the present invention. The control signal generation section 106 generates a transmission power control signal to each mobile station apparatus at every unit slot. However, for the simplification of description, a case is aimed at where a transmission power control signal to a certain mobile station apparatus is generated.

By reference to FIG. 2, the known pattern part of a received signal is inputted into a complex multiplication section 201 and a square circuit 207 from the reception RF section 103 (see FIG. 1).

A complex conjugate section 202 executes the complex conjugate operation of a known pattern owned by the present base station apparatus and outputs the result of the operation to the complex multiplication section 201. The complex multiplication section 201 executes the complex multiplication of the known pattern part in the received signal by an operation result from the complex conjugate section 202.

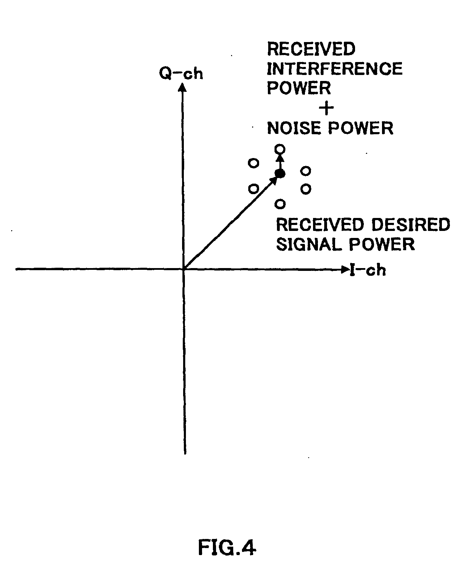

A desired signal power measurement section 204 measures desired signal power by the use of a result of the complex multiplication in the complex multiplication section 201. That is, the desired signal power measurement section 204 calculates the position (designated by the filled circle on the complex plane of FIG. 4) of the received desired signal by averaging each pilot signal (designated by an outlined circle on the complex plane of FIG. 4) in the received signal, and measures the desired signal power.

An interference/noise power measurement section 203 measures a sum of interference power and noise power by the use of a result of the complex multiplication in the complex multiplication section 201. That is, the interference/noise power measurement section 203 calculates the position (designated by the filled circle on the complex plane of FIG. 4) of a desired received signal by averaging each pilot signal (designated by an outlined circle on the complex plane of FIG. 4) in the received signal, and then the interference/noise power measurement section 203 calculates a sum of squares of the vector sum of the position of each pilot signal and the position of the received desired signal to obtain the sum of the interference power and the noise power on the basis of an average value of the result of the calculation.

An SIR calculation section 205 measures a signal to interference power ratio (SIR) by the use of the desired signal power measured by the desired signal power measurement section 204 and the sum of the interference power and the noise power measured by the interference/noise power measurement section 203, and the SIR calculation section 205 outputs the SIR that was measured (measured SIR(reception qualities)) to a comparison section 206 that will be described later.

On the other hand, the square circuit 207 squares the absolute value of the known pattern part in the received signal. A total power measurement section 208 measures the received power (total power) at the antenna 101 (see FIG. 1) by the use of an operation result obtained by the square circuit 207.

A comparison section 209 compares the total power measured by the total power measurement section 208 with a threshold value. As the threshold value, a value generated by the addition of a prescribed value to the total power at the previous slot, a value generated by the addition of a prescribed value to an average value of the total power at previous slots, or the like can be used.

Furthermore, the comparison section 209 outputs information indicating whether a new interference source has appeared or not (hereinafter referred to as "interference source appearance information") to a target SIR decision section 210. The comparison section 209 judges that the total power has greatly changed in comparison with the previous total power when the total power measured by the total power measurement section 208 exceeds the threshold value, and the comparison section 209 outputs the interference source appearance information indicating the appearance of a new interference source. on the contrary, the comparison section 209 judges that the total power does not greatly changed in comparison with the previous power when the total power measured by the total power measurement section 208 is the threshold value or below, and the comparison section 209 outputs the interference source appearance information indicating that no new interference source has not appeared.

The target SIR decision section 210 decides the target SIR in the present base station apparatus on the basis of the interference source appearance information and the new mobile station information, and outputs the decided target SIR to the comparison section 206. The details of the target SIR decision section 210 are further described by reference to FIG. 3. FIG. 3 is a block diagram showing the configuration of the target SIR decision section 210 in the control signal generation section 106 in the base station apparatus according to Embodiment 1 of the present invention.

By reference to FIG. 3, an increase value decision section 301 uses "0" as an increase value in a usual state (namely, in the case where new mobile station information indicates that "no new mobile station apparatus has appeared" and interference source appearance information indicates "no new interference source has appeared").

Moreover, the increase value decision section 301 uses a prescribed value as the increase value in a state of the appearance of interference (namely, in the case where the new mobile station information indicates the "appearance of a new mobile station apparatus" or in the case where the interference source appearance information indicates the "appearance of a new interference source"). The prescribed value can be set as follows. That is, the prescribed value may be set as a fixed value (e.g. fixed 1 dB), or the prescribed value may be set by the consideration of the data rate of a new mobile station apparatus or the like. To put it concretely, because the interference by a new mobile station apparatus can be considered to be large when the data rate of the new mobile station apparatus is large, the prescribed value is set to be large, and because the interference by a new mobile station apparatus can be considered to be small when the data rate of the new mobile station apparatus is small, the prescribed value is set to be small.

Furthermore, the increase value decision section 301 outputs such an increase value to an adder 303. However, the increase value decision section 301 uses "0" as the increase value when the increase value decision section 301 receives a reset signal.

The reset signal is inputted into the increase value decision section 301 in the case where a fixed time has passed from a point of time when interference had appeared, or in the case where a prescribed condition (for example, whether the influence of a newly appeared interference is exerted on the averaging of interference power by the interference/noise power measurement section 203 or not) is satisfied after the interference had appeared.

A memory section 302 stores the present target SIR (the target SIR in the present base station apparatus), and outputs the present target SIR to the adder 303. Hereupon, the present target SIR is controlled by the conventional outer loop control. That is, for example, the present target SIR is set to be large when a measured FER is larger than the target FER in a mobile station apparatus, and the present target SIR is contrarily set to be small when a measured FER is equal to the target FER or less in the mobile station apparatus.

The adder 303 outputs an SIR generated by the addition of the present target SIR from the memory section 302 and an increase value from the increase value decision section 301 to the comparison section 206 (see FIG. 2) as a new target SIR.

By reference to FIG. 2, the comparison section 206 compares a target SIR from the target SIR decision section 210 and a measured SIR from the SIR calculation section 205, and generates a transmission power control signal to a mobile station apparatus on the basis of a comparison result. That is, the comparison section 206 generates a transmission power control signal instructing the decrease of transmission power to the present base station apparatus when the measured SIR exceeds the target SIR. On the contrary, the comparison section 206 generates a transmission power control signal instructing the increase of transmission power to the present base station apparatus when the measured SIR is equal to the target SIR or less. The transmission power control signal generated in such a way is outputted to the transmission frame generating section 107.

In the above, the concrete configuration of the control signal generation section 106 is described. Incidentally, although the description is hereupon performed by the aiming at a case where the control signal generation section 106 generates a transmission power control signal to a certain mobile station apparatus, the control signal generation section 106 can generate transmission power control signals in an aforementioned way to all mobile station apparatuses that are performing communication.

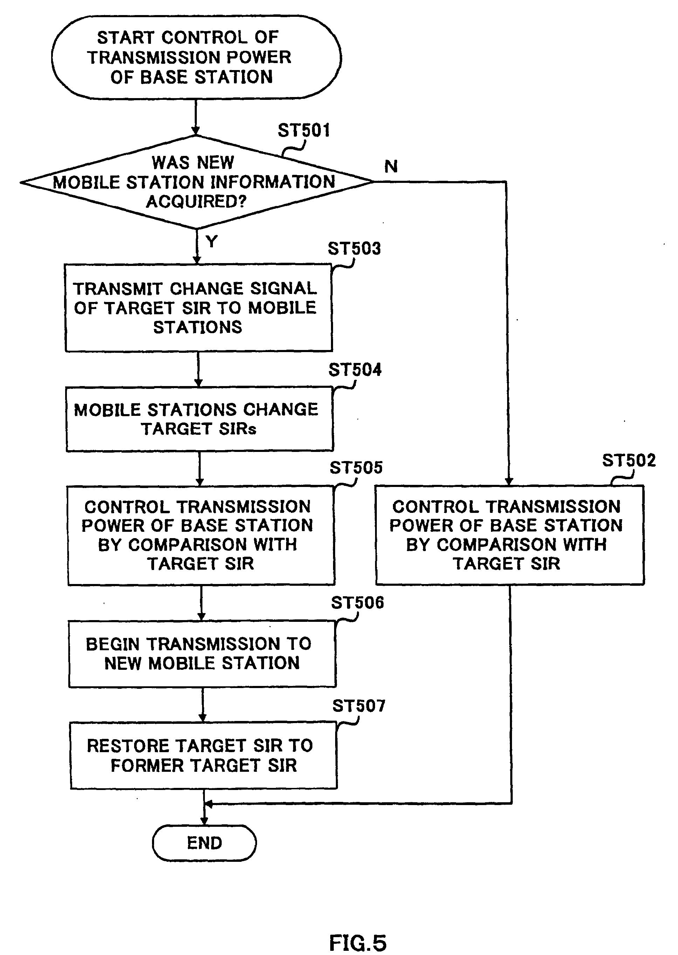

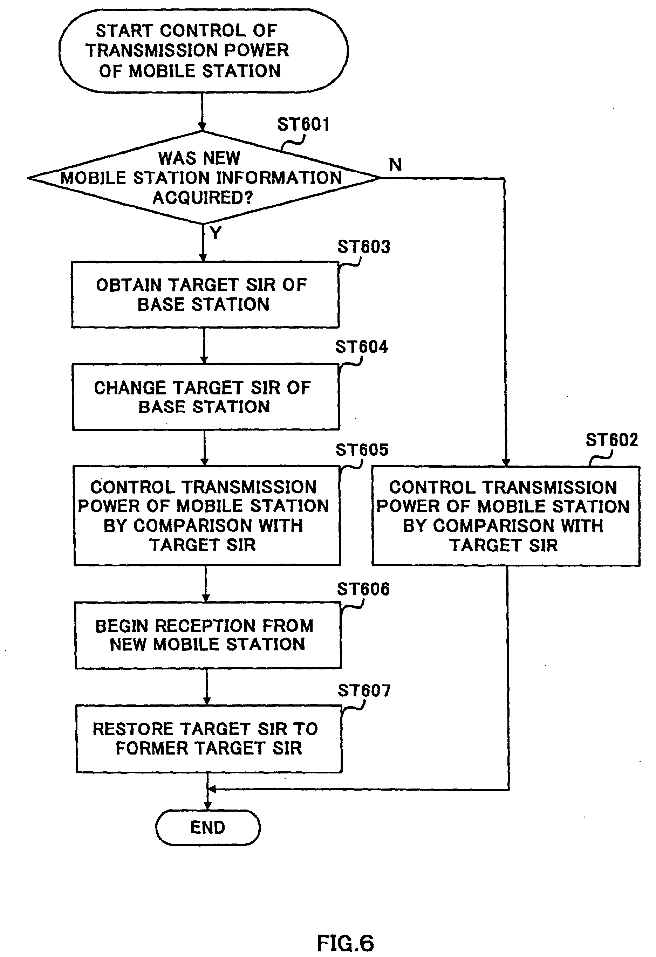

Next, the flow of transmission power control by a base station apparatus having the aforesaid configuration is described by the division of cases to the appearance of a new mobile station apparatus and the appearance of a new interference source. At first, the case where a new mobile station apparatus appears is described by reference to FIG. 5 and FIG. 6 besides.

FIG. 5 is a flow chart showing a control procedure to the transmission power of the base station apparatus according to Embodiment 1 of the present invention by the present base station apparatus in the case where a new mobile station apparatus appears. By reference to FIG. 5, at ST 501, the procedure shifts to ST 503 when the base station apparatus recognized the appearance of a new mobile station apparatus by new mobile station information. Moreover, the procedure shifts to ST 502 when the base station apparatus recognized by new mobile station information that no new mobile station apparatus appeared.

At ST 503, the base station apparatus transmits a signal instructing the change of the target SIR of each mobile station apparatus to each mobile station apparatus. At ST 504, each mobile station apparatus increases its present target SIR that is controlled by the outer loop control by receiving the signal instructing the change of the target SIR from the base station apparatus.

At ST 505, each mobile station apparatus generates a transmission power control signal on the basis of a comparison result of its measured SIR and the target SIR after the change, and transmits a transmission signal including the generated transmission power control signal to the base station apparatus. As a result, the base station apparatus increases its transmission power to each mobile station apparatus. That is, the base station apparatus performs its transmission to each mobile station apparatus by the use of a transmission power value larger than that in the case where the transmission power value is controlled to the necessary minimum value by the outer loop control.

At ST 506, the base station apparatus begins its transmission to a new mobile station apparatus. In this case, a signal transmitted by the base station apparatus to each existing mobile station apparatus is received by each mobile station apparatus in a good state while it is interfered by a signal transmitted by the base station apparatus to the new mobile station apparatus. After that, the target SIR in each mobile station apparatus receives the usual outer loop control.

At ST 507, according to various situations such as the passage of a fixed time or other situations, each mobile station apparatus restores the target SIR to its former target SIR. In this case, each mobile station apparatus may immediately restore the target SIR to its former target SIR, or may gradually restore the target SIR to its former target SIR.

On the other hand, at ST 502, each mobile station apparatus generates a transmission power control signal on the basis of a comparison result of a measured SIR with a target SIR controlled by the outer loop control as usual, and transmits the generated transmission power control signal to the base station apparatus.

FIG. 6 is a flow chart showing a control procedure to the transmission power of each mobile station apparatus by a base station apparatus according to Embodiment 1 of the present invention in the case where a new mobile station apparatus appears. By reference to FIG. 6, at ST 601, the procedure shifts to ST 603 in the case where the base station apparatus recognized the appearance of a new mobile station apparatus by new mobile station information. Furthermore, the procedure shifts to ST 602 in the case where the base station apparatus recognized by the new mobile station information by the new mobile station information that no new mobile station apparatus appeared.

At ST 603, the base station apparatus obtains a new target SIR in the present base station apparatus. At ST 604, the base station apparatus uses the target SIR obtained at ST 603 as a new target SIR.

At ST 605, the base station apparatus generates a transmission power control signal to each mobile station apparatus on the basis of the comparison result of a measured SIR with the target SIR after the change, and transmits a signal including the generated transmission power control signal to each mobile station apparatus. As a result, each mobile station apparatus increases its transmission power to the base station apparatus. That is, each mobile station apparatus performs its transmission to the base station apparatus by means of the transmission power larger than that in the case where the transmission power is controlled by the outer loop control to be the necessary minimum value.

At ST 606, the base station apparatus begins the reception of a signal transmitted from the new mobile station apparatus. In this case, a signal transmitted by each existing mobile station apparatus is received by the base station apparatus in a good state while the signal is interfered by the signal transmitted by the new mobile station apparatus. After that, the target SIR in the base station apparatus is controlled by the usual outer loop control.

At ST 607, according to various situations such as the passage of a fixed time, or other situations, the base station apparatus restores its target SIR to its former target SIR. In this case, the base station apparatus may immediately restore its target SIR to its former target SIR, or may gradually restore its target SIR to its former target SIR.

On the other hand, at ST 602, the base station apparatus generates a transmission power control signal to each mobile station apparatus on the basis of a comparison result of a measured SIR with a target SIR controlled by the outer loop control as usual, and transmits the generated transmission power control signal to each mobile station apparatus.

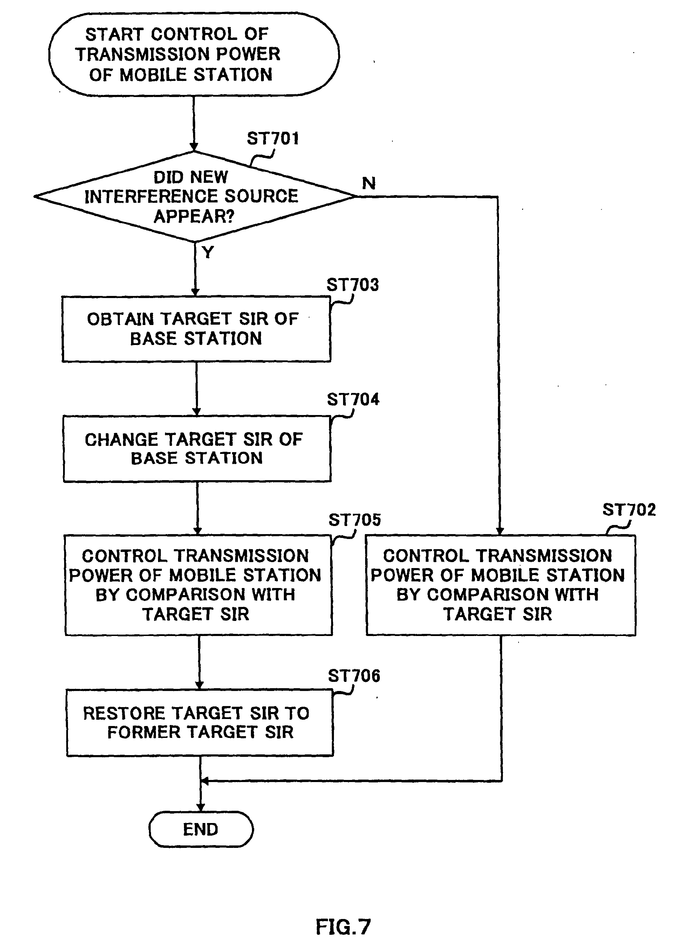

Next the case where a new interference source has appeared is described by reference to FIG. 7. FIG. 7 is a flow chart showing a control procedure to the transmission power of each mobile station apparatus by a base station apparatus according to Embodiment 1 of the present invention in the case where a new interference source appeared. By reference to FIG. 7, at ST 701, the procedure shifts to ST 702 in the case where the base station apparatus recognized the appearance of a new interference source by interference source information. Furthermore, the procedure shifts to ST 703 in the case where the base station apparatus recognized the appearance of a new interference source by the interference source information.

At ST 703, the base station apparatus obtains a new target SIR in the present base station apparatus. At ST 704, the base station apparatus uses the target SIR obtained at ST 703 as a new target SIR.

At ST 705, the base station apparatus generates a transmission power control signal to each mobile station apparatus on the basis of the comparison result of a measured SIR with the target SIR after the change, and transmits signal including the generated transmission power control signal to each mobile station apparatus. As a result, each mobile station apparatus increases its transmission power to the base station apparatus. That is, each mobile station apparatus performs its transmission to the base station apparatus by means of the transmission power larger than that in the case where the transmission power is controlled by the outer loop control to be the necessary minimum value. After that, a signal transmitted by each existing mobile station apparatus is received by the base station apparatus in a good state while the signal is interfered by the new interference source. After that, the target SIR in the base station apparatus is controlled by the usual outer loop control.

At ST 706, according to various situations such as the passage of a fixed time, or other situations, the base station apparatus restores its target SIR to its former target SIR. In this case, the base station apparatus may immediately restore its target SIR to its former target SIR, or may gradually restore its target SIR to its former target SIR.

On the other hand, at ST 702, the base station apparatus generates a transmission power control signal to each mobile station apparatus on the basis of a comparison result of a measured SIR with a target SIR controlled by the outer loop control as usual, and transmits the generated transmission power control signal to each mobile station apparatus. In the above, the flow of the transmission power control by a base station apparatus having the aforesaid configuration has been described.

As described above, according to the present embodiment, a base station apparatus transmits a transmission power control signal instructing the increase of respective transmission power to existing mobile station apparatuses by increasing the target SIR in the present base station apparatus in the case where a new mobile station apparatus appears. Because the existing mobile station apparatuses thereby increase their transmission power to the base station apparatus, signals transmitted by the existing mobile station apparatuses are received by the base station apparatus in a good state while the signals are interfered by a signal transmitted by the new mobile station apparatus after the new mobile station apparatus began to transmit signals.

Furthermore, in the case where a new mobile station apparatus appears, by the increases of the target SIRS of existing mobile station apparatuses, each mobile station apparatus transmits a transmission power control signal instructing the increase of transmission power to a base station apparatus. Because the base station apparatus thereby increases its transmission power to each mobile station apparatus, a signal transmitted by the base station apparatus to each existing mobile station apparatus is received by each existing mobile station apparatus in a good state while the signal is interfered by a signal transmitted by the base station apparatus to the new mobile station apparatus after the base station apparatus began to transmit signals to the new mobile station apparatus.

Furthermore, in the case where a new interference source appeared, similarly in the case where a new mobile station apparatus appears, because a base station apparatus increases the target SIR in the present base station apparatus, each existing mobile station apparatus increases its transmission power to the base station apparatus. Thereby, a signal transmitted by each existing mobile station apparatus is received by the base station apparatus in a good state while the signal is interfered by the new interference source.

Consequently, according to the present embodiment, the deterioration of communication qualities caused by the appearance of a new mobile station apparatus or the appearance of a new interference source can be prevented .

Incidentally, although the present embodiment is described by the exemplification of a case where an SIR is used as a factor for the recognition of reception qualities, the present invention is not limited to such a case, the invention can applied to a case where elements other than the SIR is used.

Although the present embodiment is described by the exemplification of a case where the transmission power of both of a base station apparatus and a mobile station apparatus is controlled in parallel, the present invention can be applied to a case where only the transmission power of either of the base station apparatus and the mobile station apparatus is controlled.

That is, at first, in the case where a base station apparatus controls only the transmission power of the present base station apparatus, the base station is required only to increase target SIRs of existing mobile station apparatuses at the time of the appearance of a new mobile station apparatus. The same effects as those of the aforesaid embodiment can thereby be obtained.

Secondly, in the case where the base station apparatus controls only the transmission power of a mobile station apparatus, the base station apparatus is required only to increase the target SIR in the present base station apparatus at the time of the appearance of a new mobile station apparatus and at the time of the appearance of a new interference source. The same effects as those of the aforesaid embodiment can thereby be obtained.

### (Embodiment 2)

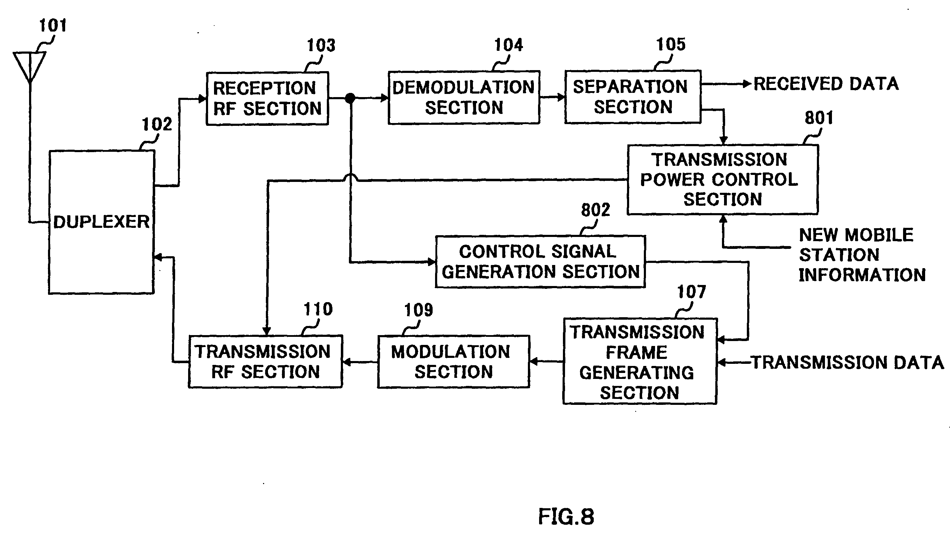

In the present embodiment, descriptions are given to a case where a base station apparatus changes transmission power to a mobile station apparatus regardless of a transmission power control signal transmitted by the mobile station apparatus, or to a case where a base station apparatus generates a transmission power control signal to a mobile station apparatus regardless of a comparison result of a measured SIR with the target SIR of the base station apparatus. A base station apparatus according to the present embodiment is described by reference to FIG. 8 in the following.

FIG. 8 is a block diagram showing the configuration of a base station apparatus according to Embodiment 2 of the present invention. Incidentally, the same configuration elements in FIG. 8 as those of Embodiment 1 (shown in FIG. 1) are designated by the same reference marks as those of FIG. 1, and the detailed descriptions of them are omitted.

In FIG. 8, a transmission power control section 801 is the same as the transmission power control section 111, except that the transmission power control section 801 controls the transmission power of a transmission signal to each mobile station apparatus on the basis of new mobile station information. That is, at first, the transmission power control section 801 controls the transmission power of a transmission signal to each mobile station apparatus in the case where the new mobile station information indicates that "no new mobile station apparatus appears" like the transmission power control section 111. Furthermore, the transmission power control section 801 controls the transmission RF section 110 such that the transmission RF section 110 increases the transmission power of a transmission signal to each mobile station apparatus by a prescribed value regardless of the TPC bit of each mobile station apparatus in the case where the new mobile station information indicates that "a new mobile station apparatus appears".

By the transmission power control section 801, the base station apparatus increases the transmission power to each mobile station apparatus in the case where a new mobile station apparatus appeared. Consequently, a signal transmitted by the base station apparatus to each existing mobile station apparatus is received by each mobile station apparatus in a good state while the signal is interfered by a signal transmitted by the base station apparatus to a new mobile station apparatus after the base station apparatus began to transmit the signal to the new mobile station apparatus.

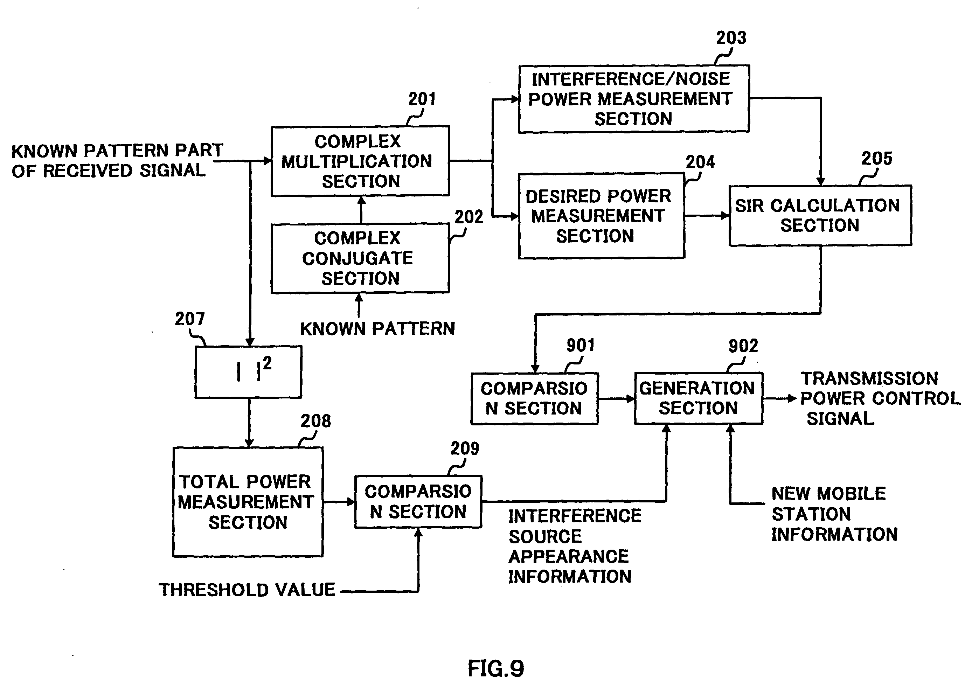

A control signal generation section 802 generates a transmission power control signal to each mobile station apparatus on the basis of a comparison result of a measured SIR and the target SIR controlled by the outer loop control in a usual state, and generates a transmission power control signal instructing the increase of transmission power to each mobile station apparatus regardless of the comparison result of the measured SIR and the target SIR in a state of the appearance of interference. The concrete configuration of the control signal generation section 802 is described by reference to FIG. 9.

FIG. 9 is a block diagram showing the configuration of the control signal generation section 802 in the base station apparatus according to Embodiment 2 of the present invention. Incidentally, the same configuration elements in FIG. 9 as those of Embodiment 1 (FIG. 2) are designated by the same reference marks as those in FIG. 2, and detailed descriptions of them are omitted.

In FIG. 9, a comparison section 901 performs the comparison of a measured SIR from the SIR calculation section 205 with a present SIR, and outputs a comparison result to a generation section 902. Incidentally, the present SIR is controlled by the conventional system outer loop control.

Interference source appearance information and new mobile station information, both of which have been described with regard to Embodiment 1, are inputted into the generation section 902. The generation section 902 generates a transmission power control signal to each mobile station apparatus on the basis of a comparison result from the comparison section 901 in a usual state (i.e. a state such that the new mobile station information indicates that "no new mobile station apparatus appeared" and the interference source appearance information indicates that "no new interference source appeared"). That is, in the usual state, the generation section 902 generates a transmission power control signal instructing the decrease of the transmission power of each mobile station apparatus in the case where a measured SIR exceeds its target SIR to each mobile station apparatus, and the generation section 902 generates transmission power control signal instructing the increase of the transmission power in the case where a measured SIR is equal to the target SIR or less to each mobile station apparatus.

Furthermore, the generation section 902 generates a transmission power control signal instructing the increase of transmission power to each mobile station apparatus regardless of the comparison result from the comparison section 901 in the state of the appearance of interference (namely, in the case where the new mobile station information indicates that "a new mobile station apparatus appears" or in the case where the interference source appearance information indicates that "a new interference source appeared").

Because, by the control signal generation section 802, the base station apparatus transmits a transmission power control signal instructing the increase of transmission power to each mobile station apparatus in case of the appearance of a new mobile station apparatus, each mobile station apparatus increases its transmission power to the base station apparatus. Consequently, a signal transmitted by each existing mobile station apparatus is received by the base station apparatus in a good state while it is interfered by a signal transmitted by the new mobile station apparatus after the new mobile station apparatus began its transmission to the base station apparatus.

Furthermore, the base station apparatus transmits a transmission power control signal instructing the increase of transmission power to each mobile station apparatus also in case of the appearance of a new interference source. Consequently, a signal transmitted by each existing mobile station apparatus is received by the base station apparatus in a good state while it is interfered by the new interference source.

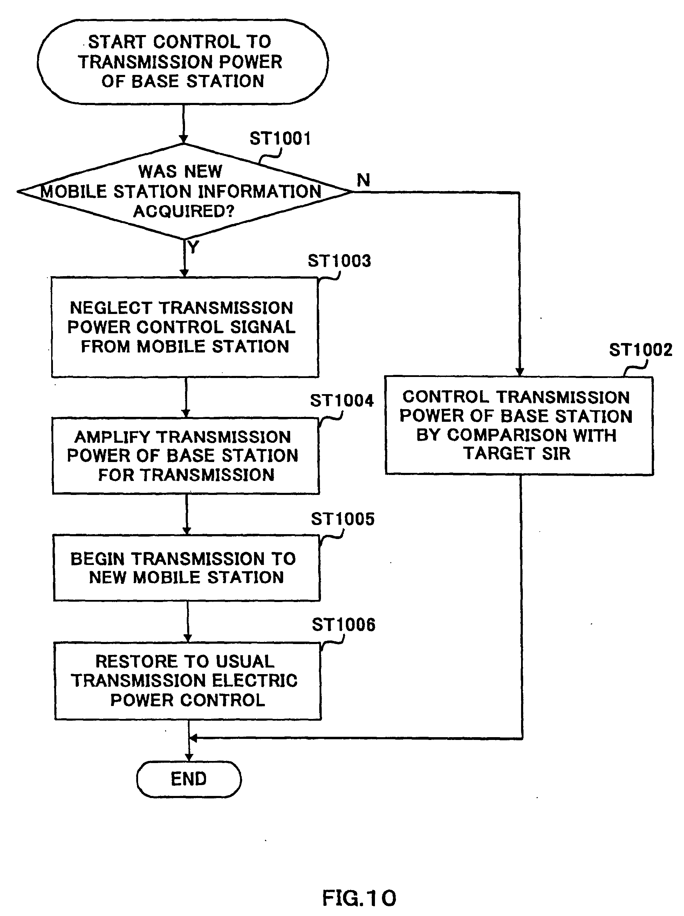

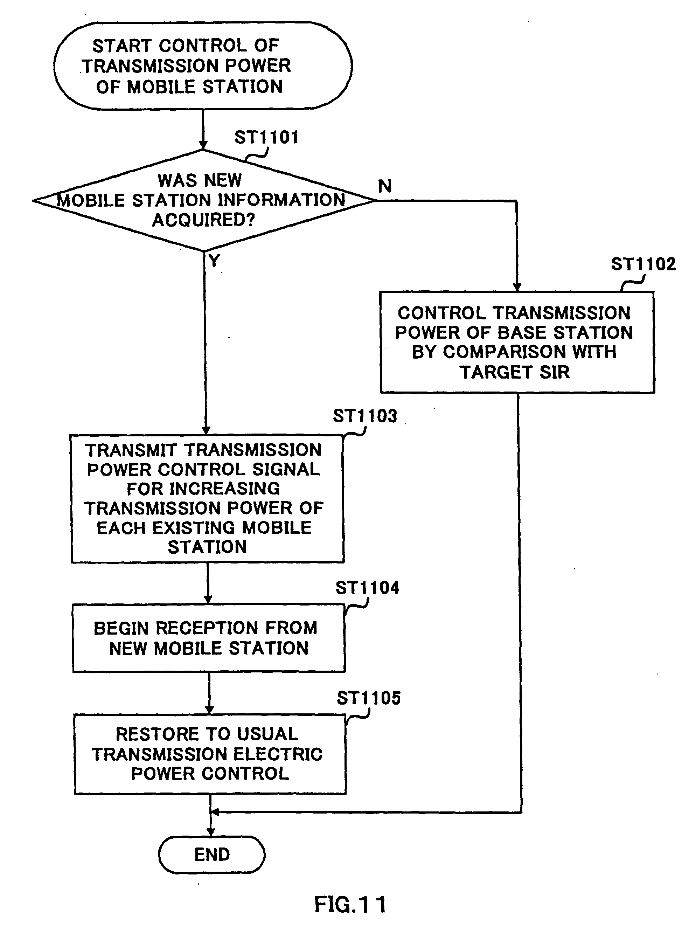

Next, the flow of transmission power control by a base station apparatus having the aforesaid configuration is described by the division of cases to the appearance of a new mobile station apparatus and the appearance of a new interference source. At first, the case where a new mobile station apparatus appears is described by reference to FIG. 10 and FIG. 11.

FIG. 10 is a flow chart showing a control procedure to the transmission power of the base station apparatus according to Embodiment 2 of the present invention by the present base station apparatus in the case where a new mobile station apparatus appears. By reference to FIG. 10, at ST 1001, the procedure shifts to ST 1003 when the base station apparatus recognized the appearance of a new mobile station apparatus by new mobile station information. Moreover, the procedure shifts to ST 1002 when the base station apparatus recognized by new mobile station information that no new mobile station apparatus appeared.

At ST 1003, the base station apparatus neglects a transmission power control signal transmitted from each mobile station apparatus. At ST 1004, the base station apparatus increases its transmission power to each mobile station apparatus, and performs its transmission to each mobile station apparatus. At ST 1005, the base station apparatus begins the transmission to a new mobile station apparatus. In this case, a signal transmitted by the base station apparatus is received by each mobile station apparatus in a good state while it is interfered by a signal transmitted by the base station apparatus to the new mobile station apparatus.

At ST 1006, according to various situations such as the passage of a fixed time or other situations, the base station apparatus restores its transmission power control to each mobile station apparatus to its usual transmission power control.

On the other hand, at ST 1002, the base station apparatus controls its transmission power to each mobile station apparatus on the basis of a transmission power control signal transmitted by each mobile station apparatus. Incidentally, the transmission power control signal is generated by each mobile station apparatus on the basis of a comparison result of a target SIR and a measured SIR in each mobile station apparatus.

FIG. 11 is a flow chart showing a control procedure to the transmission power of each mobile station apparatus by a base station apparatus according to Embodiment 2 of the present invention in the case where a new mobile station apparatus appears. By reference to FIG. 11, at ST 1101, the procedure shifts to ST 1103 in the case where the base station apparatus recognized the appearance of a new mobile station apparatus by new mobile station information. Furthermore, the procedure shifts to ST 1102 in the case where the base station apparatus recognized by the new mobile station information that no new mobile station apparatus appeared.

At ST 1103, the base station apparatus generates a transmission power control signal instructing the increase of transmission power to each mobile station apparatus regardless of a comparison result of a measured SIR with a target SIR. Moreover, the base station apparatus transmits the transmission power control signal generated in such a way to each mobile station apparatus.

At ST 1104, the base station apparatus begins the reception of a signal transmitted from the new mobile station apparatus. In this case, a signal transmitted by each existing mobile station apparatus is received by the base station apparatus in a good state while the signal is interfered by the signal transmitted by the new mobile station apparatus.

At ST 1105, according to various situations such as the passage of a fixed time or other situations, the base station apparatus generates a transmission power control signal to each mobile station apparatus on the basis of a comparison result of a measured SIR with a target SIR.

On the other hand, at ST 1102, the base station apparatus generates a transmission power control signal to each mobile station apparatus on the basis of a comparison result of a measured SIR with a target SIR controlled by the outer loop control as usual, and transmits the generated transmission power control signal to each mobile station apparatus.

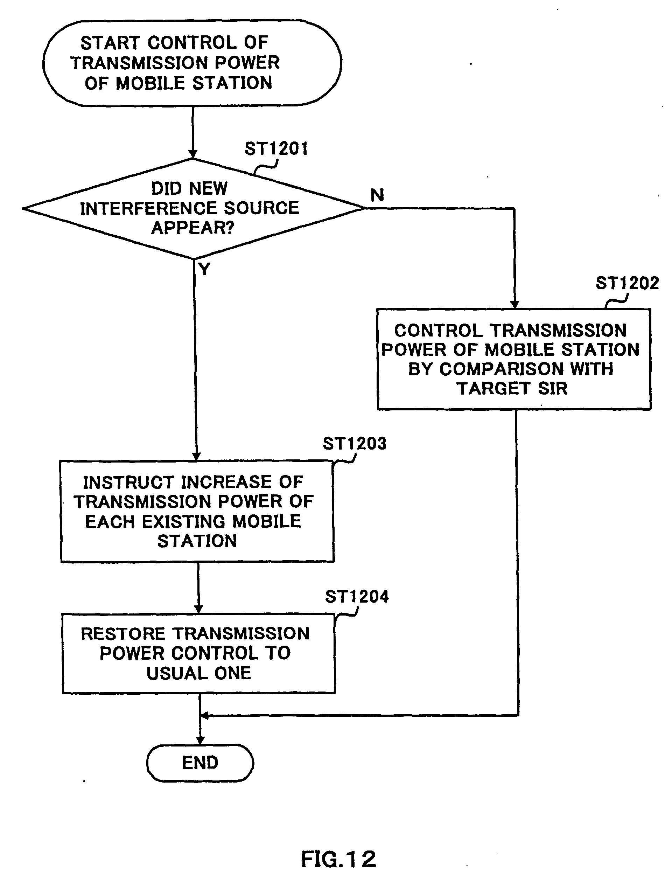

Next the case where a new interference source has appeared is described by reference to FIG. 12. FIG. 12 is a flow chart showing a control procedure to the transmission power of each mobile station apparatus by a base station apparatus according to Embodiment 2 of the present invention in the case where a new interference source appeared. By reference to FIG. 12, at ST 1201, the procedure shifts to ST 1202 in the case where the base station apparatus recognized the appearance of a new interference source by interference source information. Furthermore, the procedure shifts to ST 1203 in the case where the base station apparatus recognized that no new interference source appeared by the interference source information.

At ST 1203, the base station apparatus generates a transmission power control signal instructing the increase of transmission power to each mobile station apparatus regardless of a comparison result of a measured SIR with a target SIR. Furthermore, the base station apparatus transmits the transmission power control signal generated in such a way to each mobile station apparatus. After that, a signal transmitted by each existing mobile station apparatus is received by the base station apparatus in a good state while it is interfered by the new interference source.

At ST 1204, according to various situations such as the passage of a fixed time or other situations, the base station apparatus generates a transmission power control signal to each mobile station apparatus on the basis of a comparison result of a measured SIR with a target SIR.

On the other hand, at ST 1102, the base station apparatus generates a transmission power control signal to each mobile station apparatus on the basis of a comparison result of a measured SIR with a target SIR controlled by the outer loop control as usual, and transmits the generated transmission power control signal to each mobile station apparatus. In the above, the flow of the transmission power control by a base station apparatus having the aforesaid configuration has been described.

As described above, according to the present embodiment, a base station apparatus transmits a transmission power control signal instructing the increase of respective transmission power to existing mobile station apparatuses regardless of a comparison result of a measured SIR with a target SIR in the case where a new mobile station apparatus appears. Because the existing mobile station apparatuses thereby increase their transmission power to the base station apparatus, signals transmitted by the existing mobile station apparatuses are received by the base station apparatus in a good state while the signals are interfered by a signal transmitted by the new mobile station apparatus after the new mobile station apparatus began to transmit signals.

Furthermore, in the case where a new mobile station apparatus appears, the base station apparatus increases its transmission power to each mobile station apparatus regardless of a transmission power control signal transmitted from each mobile station apparatus. Thereby, a signal transmitted by the base station apparatus is received by each existing mobile station apparatus in a good state while the signal is interfered by a signal transmitted by the base station apparatus to the new mobile station apparatus after the base station apparatus began to transmit signals to the new mobile station apparatus.

Furthermore, in the case where a new interference source appeared, similarly in the case where a new mobile station apparatus appears, a base station apparatus transmits transmission power control signals instructing the increase of transmission power to existing mobile station apparatuses regardless of a comparison result of a measured SIR with a target SIR. Thereby, a signal transmitted by each existing mobile station apparatus is received by the base station apparatus in a good state while the signal is interfered by the new interference source.

Consequently, according to the present embodiment, the deterioration of communication qualities caused by the appearance of a new mobile station apparatus or the appearance of a new interference source can be prevented.

Although the present embodiment is described by the exemplification of a case where the transmission power of both of a base station apparatus and a mobile station apparatus are controlled in parallel, the present invention can also applied to a case where the transmission power of either of the base station apparatus and the mobile station apparatus is controlled.

That is, at first, in the case where a base station apparatus controls only the transmission power of the present base station apparatus, the base station is required only to increase transmission power to each mobile station apparatus regardless of a transmission power control signal transmitted from each mobile station apparatus at the time of the appearance of a new mobile station apparatus. The same effects as those of the aforesaid embodiment can thereby be obtained.

Secondly, in the case where the base station apparatus controls only the transmission power of a mobile station apparatus, the base station apparatus is required only to transmit transmission power control signals instructing the increase of transmission power to existing mobile station apparatuses regardless of a comparison result of a measured SIR with a target SIR at the time of the appearance of a new mobile station apparatus and at the time of the appearance of a new interference source. The same effects as those of the aforesaid embodiment can thereby be obtained.

### (Embodiment 3)

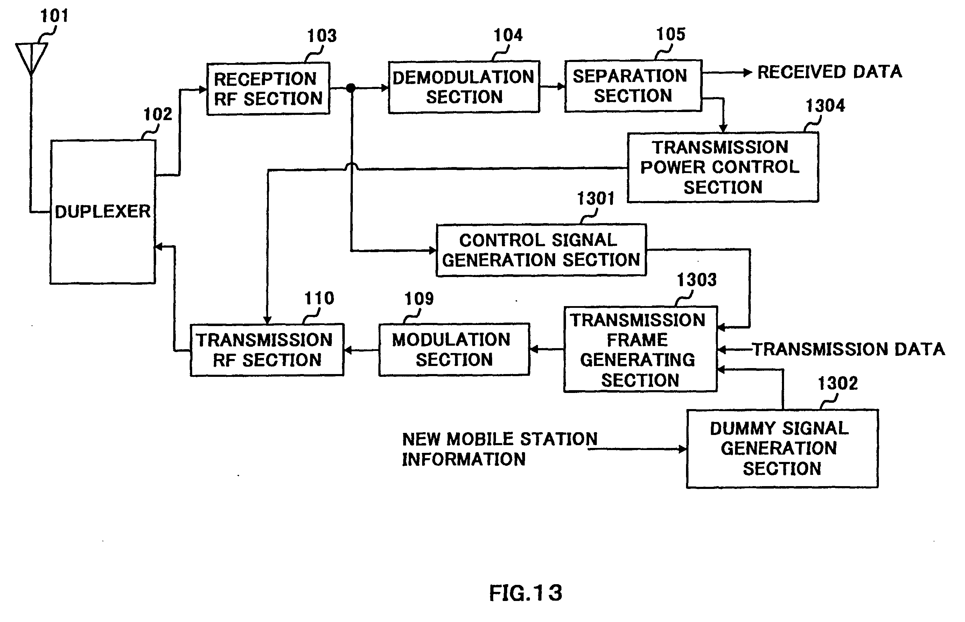

In the present embodiment, a description is given to a case where a base station apparatus transmits a dummy signal (or a pseudo interference) while the base station apparatus is gradually increasing its transmission power. The base station apparatus according to the present embodiment is described in the following by reference to FIG. 13.

FIG. 13 is a block diagram showing the configuration of a base station apparatus according to Embodiment 3 of the present invention. Incidentally, the same configuration elements in FIG. 13 as those of Embodiment 1 (shown in FIG. 1) are designated by the same reference marks as those of FIG. 1, and the detailed descriptions of them are omitted.

In FIG. 13, a control signal generation section 1301 generates a transmission power control signal to each mobile station apparatus at every unit slot by the use of the known pattern part in a received signal from the reception RF section 103. To put it concretely, the control signal generation section 1301 at first measures an SIR by the use of the aforesaid known pattern part. Incidentally, the measurement method of the SIR is the same as that described with regard to Embodiment 1.

Furthermore, the control signal generation section 1301 generates a transmission power control signal to each mobile station apparatus on the basis of a comparison result of a measured SIR and a target SIR controlled by the outer loop control. Incidentally, the generation method of the transmission power control signal hereupon is the same as that in a usual state described with respect to Embodiment 2.

New mobile station information is inputted into a dummy signal generation section 1302. The dummy signal generation section 1302 outputs a dummy signal to a transmission frame generating section 1303 only in the state of the appearance of interference (namely, a case where the new mobile station information indicates "the appearance of a new mobile station apparatus").

The transmission frame generating section 1303 has the same configuration as that of the transmission frame generating section 107 of Embodiment 1 (shown in FIG. 1) except that the transmission frame generating section 1303 handles a dummy signal transmitted to the transmission frame generating section 1303 as a signal to one user (or a mobile station apparatus) when the dummy signal is transmitted from the dummy signal generation section 1302.

The transmission power control section 1304 has the same configuration as that of the transmission power control section 111 in Embodiment 1 except that the transmission power control section 1304 controls the transmission RF section 110 in such a way that the transmission power of the dummy signal is small at first and then gradually increases to be large only in the state of the appearance of interference.

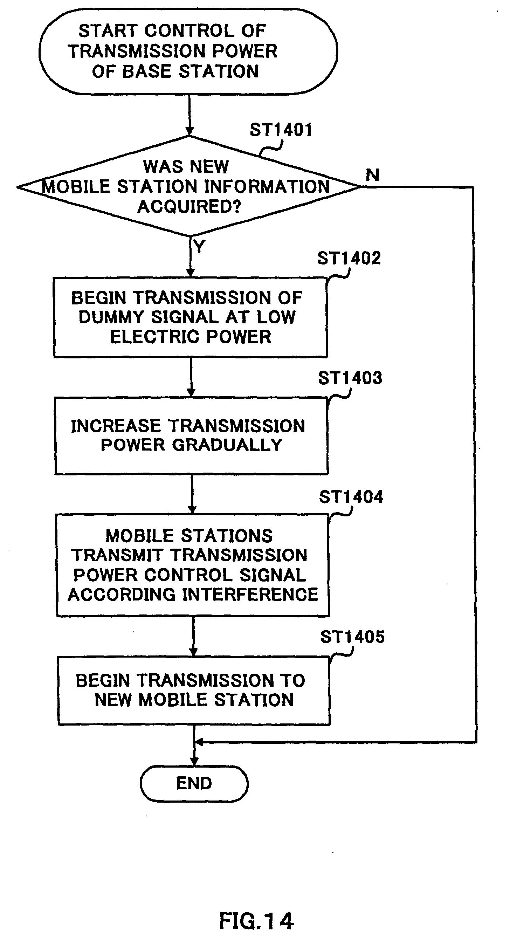

Next, the flow of transmission power control by a base station apparatus having the aforesaid configuration is described by reference to FIG 14. FIG. 14 is a flow chart showing a control procedure to the transmission power of the base station apparatus according to Embodiment 3 of the present invention by the present base station apparatus in the case where a new mobile station apparatus appears.

By reference to FIG. 14, at ST 1401, the procedure shifts to ST 1402 when the base station apparatus recognized the appearance of a new mobile station apparatus by new mobile station information. Moreover, the procedure is completed when the base station apparatus recognized by new mobile station information by new mobile station information that no new mobile station apparatus appeared.

At ST 1402, the base station apparatus at first transmits a dummy signal at low power. Because each existing mobile station apparatus thereby transmits a transmission power control signal instructing the increase of the transmission power on the basis of a comparison result of its target SIR with a measured SIR, the base station apparatus increases its transmission power to each mobile station apparatus.

At ST 1403, the base station apparatus transmits a dummy signal while increasing its power. Because each existing mobile station apparatus thereby transmits a transmission power control signal instructing the increase of its transmission power at ST 1403 likewise at ST 1402, the base station apparatus further increases its transmission power to each mobile station apparatus.

At ST 1005, the base station apparatus begins the transmission to a new mobile station apparatus. In this case, a signal transmitted by the base station apparatus to each existing mobile station apparatus is received by each mobile station apparatus in a good state while it is interfered by a signal transmitted by the base station apparatus to the new mobile station apparatus. That is, even if the base station apparatus began its transmission to a new mobile station apparatus, each mobile station apparatus can receive a signal transmitted by the base station apparatus in a good state only by performing its usual transmission power control, namely only by generating a transmission power control signal on the basis of a comparison result of a measured SIR with a target SIR.

As described above, according to the present embodiment, a base station apparatus receives a transmission power control signal instructing the increase of its transmission power from each mobile station apparatuses by transmitting a dummy signal, the transmission power of which is gradually increased, to each mobile station apparatus in the case where a new mobile station apparatus appears. Thereby the base station apparatus is increasing transmission power to each mobile station apparatus. Consequently, when the base station apparatus began to its transmission to a new mobile station apparatus, a signal transmitted by the base station apparatus to each mobile station apparatus is received by each mobile station apparatus in a good sate while it is interfered by a signal transmitted by the base station apparatus to the new mobile station apparatus.

Consequently, the base station apparatus can cope with the appearance of a new mobile station apparatus by performing its usual transmission power control except for the transmission of a dummy signal. As described above, according to the present embodiment, the deterioration of communication qualities caused by the appearance of a new mobile station apparatus can be prevented.

Incidentally, although a case where the transmission power of a dummy signal is gradually increased is described in the present embodiment, the present invention is not limited to such a case, and it is applicable to a case where the method for changing the transmission power of a dummy signal is appropriately changed.

### (Embodiment 4)

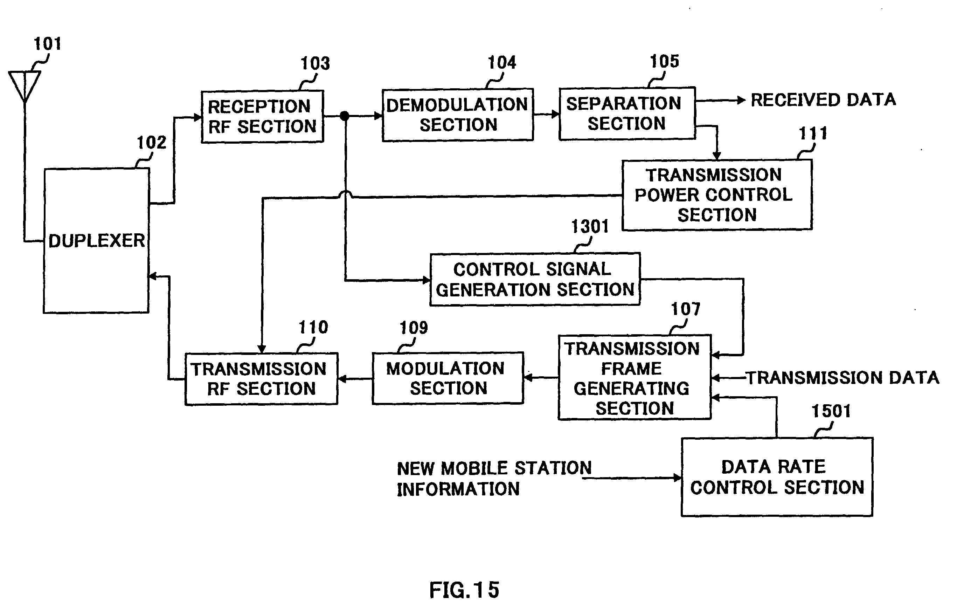

In the present embodiment, a case where the data rate of a new mobile station apparatus is gradually changed from a low speed to a high speed is described. A base station apparatus according to the present embodiment is described by reference to FIG. 15.

FIG. 15 is a block diagram showing the configuration of a base station apparatus according to Embodiment 4 of the present invention. Incidentally, the same configuration elements in Fig. 15 as those of Embodiment 1 (shown in FIG. 1) are designated by the same reference marks as those in FIG. 1, and the detailed descriptions of them are omitted.

In FIG. 15, new mobile station information described with respect to Embodiment 1 is inputted into a data rate control section 1501. The data rate control section 1501 controls the making of a transmission signal in a unit transmission frame configuration relating to a new mobile station apparatus in the case where new mobile station information indicates that "a new mobile station apparatus appears". That is, when the data rate control section 1501 begins the transmission to a new mobile station apparatus, the data rate control section 1501 controls the transmission frame generating section 107 such that the transmission frame generating section 107 makes its data rate a low speed to make a transmission signal to the new mobile station apparatus. Incidentally, the data rate in this case is one capable of being set such that a signal transmitted by the base station apparatus to each existing mobile station apparatus is received by each existing mobile station apparatus in a good state while it is interfered by a signal transmitted by the base station apparatus to a new mobile station apparatus.

After that, the data rate control section 1501 controls the transmission frame generating section 107 such that the transmission frame generating section 107 generates transmission signals to the new mobile station apparatus while increasing its data rate up to a required data rate or a transmittable data rate gradually.

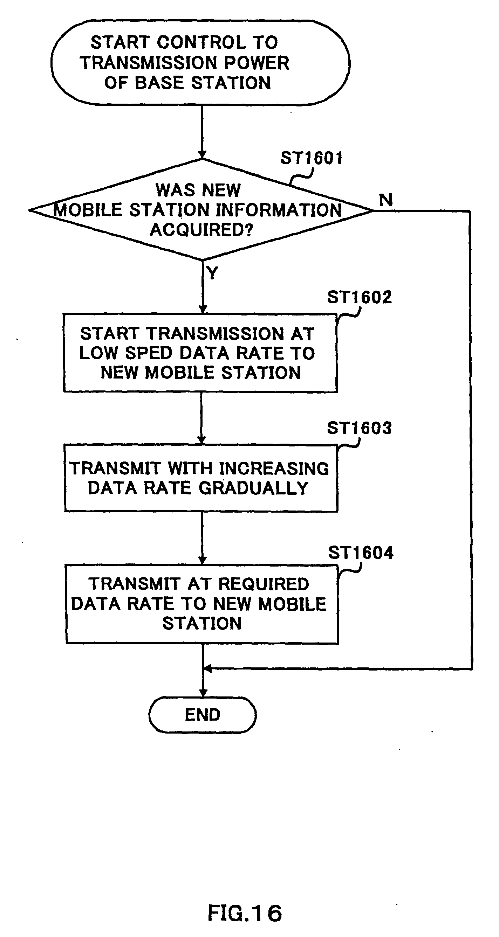

Next, the flow of transmission power control by a base station apparatus having the aforesaid configuration is described by reference to FIG. 16. FIG. 16 is a flow chart showing a control procedure to the transmission power of a base station apparatus according to Embodiment 4 of the present invention by the present base station apparatus in case of the appearance of a new mobile station apparatus.

By reference to FIG. 16, at ST 1601, the procedure shifts to ST 1602 when the base station apparatus recognized the appearance of a new mobile station apparatus by new mobile station information. Furthermore, the procedure is completed when the base station apparatus recognized by new mobile station information by new mobile station information that no new mobile station apparatus appeared.

At ST 1602, the base station apparatus performs its transmission to a new mobile station apparatus by means of a data rate lower than the required data rate or a transmittable data rate. Thereby, because a signal transmitted by the base station apparatus to each existing mobile station apparatus is interfered by a signal transmitted by the base station apparatus to the new mobile station apparatus, each mobile station apparatus transmits a transmission power control signal instructing the increase of the transmission power to the base station apparatus. As a result, the base station apparatus increases its transmission power to each mobile station apparatus for performing its transmission to each mobile station apparatus.

At ST 1603, the base station apparatus performs its transmission to the new mobile station apparatus while increasing its data rate gradually. Thereby, likewise in ST 1602, because each mobile station apparatus transmits a transmission power control signal instructing the increase of the transmission power to the base station apparatus, the base station apparatus increases its transmission power to each mobile station apparatus and performs its transmission to each mobile station apparatus.

After that, at ST 1604, the base station apparatus performs its transmission to the new mobile station apparatus by the use of a requested data rate or a transmittable data rate. At ST 1602 to ST 1604, it is needless to say that a signal transmitted by the base station apparatus to each existing mobile station apparatus is received by each mobile station apparatus in a good state while it is interfered by a signal transmitted by the base station apparatus to the new mobile station apparatus.

As described above, according to the present embodiment, in the case where a new mobile station apparatus appears, because the base station apparatus performs its transmission to the new mobile station apparatus while changing its data rate from a low speed to a high speed, a signal transmitted by the base station apparatus to each existing mobile station apparatus is received by each mobile station apparatus while it is interfered by a signal transmitted by the base station apparatus to the new mobile station apparatus. As a result, the deterioration of communication qualities caused by the appearance of the new mobile station apparatus can be prevented.

Incidentally, in the present embodiment, although a case where the data rate of a new mobile station apparatus is gradually changed from a low speed to a high speed is described, the present invention is not limited to such a case, and is also applicable to a case where a method for changing the data rate of a new mobile station apparatus is appropriately changed.

Although descriptions are given in respect of the aforesaid Embodiment 1 to Embodiment 4 to a case where the appearance of a new mobile station apparatus or the appearance of a new interference source is adopted as a factor influencing the qualities of the communication between a base station apparatus and a mobile station apparatus, the present invention is not limited to such cases, and is applicable to any case where any factor influencing the communication between the base station apparatus and the mobile station apparatus is adopted.

As described above, according to the present invention, because the generation of a transmission power control signal and the control of transmission processing are performed according to the factors that influence the qualities of the communication between a base station apparatus and a communication terminal apparatus, it is possible to provide a base station apparatus and a transmission power control method that prevent the deterioration of communication qualities caused by the appearance of a new communication terminal apparatus, the appearance of a new interference source or the like.

This application is based on the Japanese Patent Application No. HEI 11-375260 filed on December 28, 1999, entire content of which is expressly incorporated by reference herein.

### Industrial Applicability

The present invention is suitable for the utilization in a cellular system field of a CDMA system.

## Claims

1. A base station apparatus comprising:
control signal generation means for generating a transmission power control signal for instructing transmission power to a communication terminal apparatus on a basis of a comparison result of a reception quality of a signal transmitted by the communication terminal apparatus with a desired reception quality; and
transmission control means for controlling transmission processing to a transmission signal including the transmission power control signal generated by said control signal generation means on a basis of the transmission power control signal transmitted by the communication terminal apparatus,
wherein said control signal generation means and said transmission control means respectively perform the generation of the transmission power control signal and the control of the transmission processing according to a factor influencing a quality of communication with the communication terminal apparatus.

2. The base station apparatus according to claim 1, wherein the factor is an appearance of a new communication terminal apparatus or an appearance of a new interference source.

3. The base station apparatus according to claim 2, wherein said control signal generation means comprises change means for changing a desired reception quality according to the appearance of a new communication terminal apparatus or the appearance of new interference source.

4. The base station apparatus according to claim 2, wherein said transmission control means comprises insertion means for inserting a signal instructing a change of a desired reception quality in the communication terminal apparatus into the transmission signal according to the appearance of the new communication terminal apparatus.

5. The base station apparatus according to claim 2, wherein said control signal generation means generates a transmission power control signal instructing an increase of transmission power regardless of the comparison result in case of an appearance of a new communication terminal apparatus or in case of an appearance of a new interference source.

6. The base station apparatus according to claim 2, wherein said transmission control means increases transmission power of the transmission signal regardless of the transmission power control signal transmitted by the communication terminal apparatus in case of an appearance of a new communication terminal apparatus.

7. The base station apparatus according to claim 2, wherein said transmission control means comprises interference signal generation means for generating an interference signal according to a new communication terminal apparatus,
wherein said base station apparatus transmits a transmission signal including the generated interference signal.

8. The base station apparatus according to claim 2, wherein said transmission control means comprises change means for changing a data rate of a new communication terminal apparatus and said base station apparatus transmits a transmission signal including a transmission signal of the new communication terminal apparatus after the change of its data rate.

9. A communication terminal apparatus for performing radio communication with a base station apparatus, said base station apparatus comprising:
control signal generation means for generating a transmission power control signal for instructing transmission power to said communication terminal apparatus on a basis of a comparison result of a reception quality of a signal transmitted by said communication terminal apparatus with a desired reception quality; and
transmission control means for controlling transmission processing to a transmission signal including the transmission power control signal generated by said control signal generation means on a basis of the transmission power control signal transmitted by the communication terminal apparatus,
wherein said control signal generation means and said transmission control means respectively perform the generation of the transmission power control signal and the control of the transmission processing according to a factor influencing a quality of communication with said communication terminal apparatus.

10. A transmission power control method comprising:
a control signal generation step for generating a transmission power control signal for instructing transmission power to a communication terminal apparatus on a basis of a comparison result of a reception quality concerning a signal transmitted by the communication terminal apparatus with a desired reception quality; and
a transmission control step for controlling transmission processing to a transmission signal including the transmission power control signal generated at said control signal generation step on a basis of the transmission power control signal transmitted by the communication terminal apparatus,
wherein said control signal generation step and said transmission control step respectively perform the generation of the transmission power control signal and the control of the transmission processing according to a factor influencing communication with the communication terminal apparatus.
